# EUROPÄISCHE PATENTSCHRIFT

(11) **EP 1 907 714 B1**
(45) Veröffentlichungstag und Bekanntmachung des Hinweises auf die Patenterteilung: **01.12.2010**
(21) Anmeldenummer: 06776287.2
(22) Anmeldetag: 18.07.2006
(51) Int. Cl.: F16B 25/00

(54) **GEWINDESCHNEIDENDER BETONANKER**
THREAD-CUTTING CONCRETE ANCHOR
ANCRE POUR BETON FORMANT UN FILETAGE

(30) Priorität: 28.07.2005 DE 102005035942
(43) Veröffentlichungstag der Anmeldung: 09.04.2008
(73) Patentinhaber: Petras und Guggumos GbR, 86415 Mering (DE)
(72) Erfinder: FIDAN, Adnan, 86415 Mering (DE)
(74) Vertreter: Hasler, Erich
(86) Internationale Anmeldenummer: PCT/EP2006/007059
(87) Internationale Veröffentlichungsnummer: WO 2007/012417

(56) Entgegenhaltungen:
- EP-A1- 0 356 019
- DE-B- 1 137 197
- GB-A- 466 039
- JP-A- 2005 083 523
- US-A- 5 531 553
- US-A1- 2005 129 484

## Beschreibung

Die Erfindung betrifft einen gewindeschneidenden Betonanker für harte Untergründe, insbesondere für Beton, Stein, Mauerwerk oder dergleichen, gemäss dem Oberbegriff des Patentanspruchs 1.

Für die Erstellung von Befestigungen mit geringen Achs- und Randabständen ist bei einer Gattung von Befestigungselementen eine weitgehend spreizdruckfreie, formschlüssige Verankerung vorgesehen. Bei sogenannten Hinterschnittdübeln besteht die formschlüssige Verankerung darin, dass am Dübelkörper vorgesehene Spreizlappen in eine, meist in der Nähe des Bohrlochgrunds angebrachte Hinterschneidung ausgestellt werden. Die Hinterschneidung im Untergrund muss zuvor gesondert, mit Hilfe von speziellen Hinterschnittgeräten im Bohrloch erstellt werden. Diese Art der Befestigungstechnik ist sehr zeit- und kostenaufwendig. Sie wird daher üblicherweise nur bei besonders sicherheitsrelevanten Befestigungen und insbesondere für Schwerstlastbefestigungen angewandt.

Aus dem Stand der Technik sind auch sogenannte gewindeschneidende Betonschrauben bekannt. Diese weisen einen zylindrischen Schaft auf, dessen Mantelfläche zumindest bereichsweise mit einer wendelförmig umlaufenden Schneide versehen ist. Am setzrichtungsseitig abgewandten Ende weist der Schaft einen üblicherweise als Sechskant ausgebildeten Kopf auf. Der Kopf dient als Angriffsmittel zur Drehmomentübertragung beim Einschrauben der Betonschraube in eine vorbereitete Aufnahmebohrung und gleichzeitig zur Festlegung eines Bauteils. Beim Einschrauben gräbt sich die Schneide in die Wandung der zuvor erstellten Aufnahmebohrung und erzeugt so eine im wesentlichen formschlüssige Verankerung.

Aus der WO 98/04842 ist eine Betonschraube mit einem Schneidgewinde bekannt, dessen Gewindeflanken im wesentlichen parallel zu einander verlaufen. Die die Gewindeflanken verbindende Aussenfläche verläuft achsparallel zum Schaft der Betonschraube. Das Schneidgewinde ist mit Schneid-Kerben ausgestattet, die sich von der Aussenfläche in Richtung des Schafts erstrecken und zur Aussenfläche hin offene Dreiecke bilden.

Aus der EP 1233194 B1 ist eine selbstfurchende oder gewindeschneidende Betonschraube bekannt, die einen Schaft mit einem setzrichtungsseitigen Vorderende aufweist, das kegelstumpfförmig ausgebildet ist. Am gegenüberliegenden Ende ist ein Drehmoment- und Lastangriffsmittel in Form eines Sechskantkopfes vorgesehen. Das am Schraubenschaft ausgebildete Schneidgewinde weist eine zylindrische Aussenfläche auf, die achsparallel zum Schaft verläuft. Ausserdem ist die Betonschraube mit einem Vorgewinde ausgestattet, das den Schaft in einem Bereich zwischen 90° und 270° umgreift. Über diesen Winkelbereich nimmt die Breite der Aussenfläche in Setzrichtung ab und verringert sich der Gewindeüberstand in Setzrichtung. Durch diese Massnahme sollen ein gutes Eindreh- und Ausdrehverhalten bei Untergründen mit einer hohen bis zu einer niedrigen Härte erreicht werden.

Eine andere Betonschraube ist in der EP 0 905 389 A2 beschrieben, die einen im wesentlichen zylindrischen Schaft und ein zumindest abschnittsweise hieran ausgebildetes Schneidgewinde aufweist. Der setzrichtungsseitig vordere Schraubenabschnitt besteht aus gehärtetem Stahl. Der nach rückwärts daran anschliessende Schraubenabschnitt besteht aus korrosionsfestem Stahl. Die beiden Schraubenabschnitte sind drehfest miteinander verbunden. Der gezahnte Schneidgewindeabschnitt des vorderen Schraubenabschnitts ist an einer Zylinderhülse ausgebildet, die auf einen zylindrischen Ansatz des Schafts aufgesetzt und mittel Klebstoff drehfest mit diesem verbunden ist. Der Schneidgewindeabschnitt des vorderen Schraubenabschnitts geht in den Schneidgewindeabschnitt des rückwärtigen Schraubenabschnitts über.

Die bekannten Betonschrauben dienen zur Montage von Bauteilen direkt am mehr oder weniger harten Untergrund. In klassischer Schraubenmanier dient der üblicherweise mit einem Sechskant versehene Schraubenkopf als Angriffsmittel zur Drehmomentübertragung beim Einschrauben der Betonschraube in eine vorbereitete Aufnahmebohrung und gleichzeitig zur Festlegung eines Bauteils.

Andererseits sind aus dem Stand der Technik auch gewindeschneidende Betonanker bekannt, die einerseits ein Schneidgewinde aufweisen und entgegen der Setzrichtung daran anschliessend mit einem weiteren Gewinde ausgestattet sind, das in Verbindung mit einer aufschraubbaren Mutter oder dergleichen als Lastangriffsmittel für ein zu befestigendes Bauteil dient.

Ein derartiger gewindeschneidender Betonanker ist in der EP 0 356 019 beschrieben. Er weist einen Schneidschaft mit einem tiefen, groben, erhabenen Schneidgewinde auf, an den ein Befestigungsabschnitt mit einem Aussengewinde oder mit einer Gewindebohrung anschliesst. Das wendelförmig verlaufende Schneidgewinde besitzt einen flächig ausgebildeten Schneidrand, in den Hartmetalleinsätze eingesetzt sein können. Längs des wendelförmigen Schneidgewindes sind Unterbrechungen vorgesehen, die sich vom Schneidrand bis zur Mantelfläche des Schafts erstrecken. Die Unterbrechungen dienen als Spanbrecher und sollen ein Entfernen des abgetragenen Materials ermöglichen. Die Unterbrechungen sind axial derart ausgerichtet, dass sie einen axialen Schlitz bilden, in den ein Keil eintreibbar ist, um den in die Aufnahmebohrung eingedrehten Betonanker zu verriegeln. Der Schneidschaft wird drehend schlagend in eine Aufnahmebohrung eingetrieben. Der Befestigungsabschnitt dient dabei zugleich zur Drehmomentübertragung.

Aus der DE 200 05166 ist ein gewindeschneidender Betonanker bekannt, der zur Befestigung der Tragstütze für Leitplanken an Kraftfahrzeügstrassen auf einem Betonfundament dient. Der gewindeschneidende Betonanker weist einen Schneidabschnitt mit einem Schneidgewinde und einen Befestigungsabschnitt mit einem metrischen Gewinde auf, die durch einen gewindelosen Zwischenabschnitt voneinander getrennt sind. Der Schneidabschnitt ist in Analogie zu der aus der WO 98/04842 bekannten Betonschraube ausgebildet und weist ein Schneidgewinde auf, dessen Gewindeflanken im wesentlichen parallel zu einander verlaufen. Die die Gewindeflanken verbindende Aussenfläche verläuft achsparallel zum Schaft der Betonschraube. Das Schneidgewinde ist mit Schneid-Kerben ausgestattet, die sich von der Aussenfläche in Richtung des Schafts erstrecken und zur Aussenfläche hin offene Dreiecke bilden. Dieser bekannte gewindeschneidende Betonanker ist für die spezielle Anwendung zur Befestigung von Tragstützen für Leitplanken ausgelegt und ermöglicht über einen Adapter die Befestigung einer Grundplatte der Tragstütze, die mit konventionellen Bohrungen ausgestattet ist, auf einem Betonfundament.

Die US 2005/0129484 offenbart einen Betonanker mit einem vorderen Schaftabschnitt mit drei Gewindegängen unterschiedlicher Gewindetiefe. Die drei Gewindegänge sind um 120 Grad versetzt zueinander angeordnet. Im Querschnitt gibt es drei gleichmäßig beabstandete Schraubengewinde-Tangentiallinien, so dass ein Balancierungseffekt geschaffen wird, sodass der Bolzen ohne Schrägstellung fest positioniert werden kann. Ausserdem können die Schraubenränder herausgepresste Zementabfälle sammeln, um einen stärkeren Befestigungseffekt zu erzielen.

Aufgabe der vorliegenden Erfindung ist es, einen gewindeschneidenden Betonanker zu schaffen, der ein breites Anwendungsgebiet aufweist und schnell und zuverlässig in einer in harten Untergründen, wie Beton, Stein, Mauerwerk oder dergleichen, erstellten Aufnahmebohrung versetzbar ist. Auf Keile oder dergleichen zur Verriegelung des Betonankers in der Aufnahmebohrung soll verzichtet werden können. Der Betonanker soll bei Bedarf mehrfach verwendbar sein und soll daher auch wieder einfach aus der Aufnahmebohrung herausgeschraubt werden können. Dabei soll der Betonanker einfach und kostengünstig herstellbar sein.

Die Lösung dieser und noch weiterer Aufgaben besteht in einem gewindeschneidenden Betonanker, der die im kennzeichnenden Abschnitt des Patentanspruchs 1 aufgelisteten Merkmale aufweist. Weiterbildungen und/oder vorteilhafte Ausführungsvarianten der Erfindung sind Gegenstand der abhängigen Patentansprüche.

Der gewindeschneidende Betonanker zur selbstfurchenden Verankerung in harten Untergründen wie Beton, Stein, Mauerwerk oder dergleichen, besitzt einen im wesentlichen zylindrischen Schaft, dessen Kerndurchmesser gestuft ausgebildet ist. Der Schaft weist einen Schneidabschnitt mit einem wendelförmig umlaufenden Schneidgewinde auf, der bezogen auf eine Setzrichtung einen vorderen Schaftabschnitt mit einem ersten Kerndurchmesser bildet Ein Befestigungsabschnitt erstreckt sich entgegen der Setzrichtung und bildet einen rückwärtigen Schaftabschnitt, der ein Lastangriffsmittel aufweist und einen zweiten Kerndurchmesser aufweist. Weiters ist der Schaft mit einem Angriffsmittel zur Übertragung von Drehmoment an den Schaft ausgestattet Das wendelförmig am vorderen Schaftabschnitt umlaufende Schneidgewinde weist Gewindeflanken auf, die miteinander einen spitzen Winkel einschliessen.

Der erfindungsgemässe gewindescheidende Betonanker gemäss Oberbegriff von Anspruch 1 ist **dadurch gekennzeichnet, dass** die Gewindeflanken miteinander einen spitzen Winkel α einschliessen und dass der vordere Schaftabschnitt eine gewindeartige Profilierung aufweist, die sich zwischen den Windungen des Schneidgewindes entlang des vorderen Schaftabschnitts erstreckt und einen kleineren radialen Überstand aufweist als das Schneidgewinde, wobei die gewindeartige Profilierung Flanken aufweist, die miteinander einen stumpfen Winkel β einschliessen, der etwa 125° bis etwa 155° beträgt. Der Betonanker weist zwei Gewindeabschnitte auf. Das Schneidgewinde ist zum Unterschied von den aus dem Stand der Technik bekannten Betonankern nicht mit Schneid-Kerben oder Hartmetalleinsätzen bestückt. Vielmehr schliessen die Gewindeflanken miteinander einen spitzen Winkel ein und bilden so eine durchgehende, umlaufende scharfkantige Schneide, die sich beim rotierenden Setzen des Betonankers messerartig in die Wandung einer vorbereiteten Aufnahmebohrung gräbt. Der Schneidbereich des Betonankers ist an sich bereits durch den Reibschluss mit der Bohrlochwandung gegen ein unbeabsichtigtes Rückdrehen gesichert. Gesonderte Keile oder dergleichen sind nicht erforderlich. Bei der Montage eines Bauteils am Lastangriffsmittel am rückwärtigen Schaftabschnitt wird der formschlüssig in der Aufnahmebohrung verankerte Betonanker zusätzlich verspannt. Dadurch wird ein selbsttätiges Rückdrehen des Betonankers praktisch verunmöglicht. Die Ausbildung des Schneidenbereichs mit einer durchgehenden, scharfkantigen Schneide erleichtert und verbilligt den Herstellungsprozess des Betonankers.

Der erfindungsgemäss ausgebildete Betonanker wird unmittelbar in die erstellte Aufnahmebohrung eingeschraubt. Sein rückwärtiger Abschnitt mit dem Lastangriffsmittel ragt aus der Aufnahmebohrung und erlaubt den Anschluss eines Bauteils, welches dann mit einer Mutter oder dergleichen befestigt wird. Damit ersetzt der Betonanker den sonst für derartige Montagen erforderlichen metallischen Spreizdübel, in den eine Gewindestange eingeschraubt wird, um daran ein Bauteil zu befestigen. Gerade bei temporären Befestigungen ist bisher der Spreizdübel ein verlorenes Bauteil, das sich zu einem späteren Zeitpunkt sogar als störend erweisen kann. Der Spreizdübel wird üblicherweise durch Hammerschläge auf ein spezielles Werkzeug gesetzt. Untersuchungen zeigen, dass dieser schlagende Setzvorgang immer wieder zu Verletzungen führt. Der erfindungsgemässe gewindeschneidende Betonanker benötigt keinen Spreizdübel. Dadurch ist eine potentielle Verletzungsgefahr beseitigt. Der Betonanker ist bei Bedarf wieder vollständig demontierbar. Dadurch können temporäre Befestigungspunkte kostengünstiger erstellt werden. Durch den Verzicht auf den Spreizdübel kann die Aufnahmebohrung mit einem kleineren Bohrungsdurchmesser erstellt werden, ohne dadurch die erzielbaren Haltewerte zu beeinträchtigen. Dadurch verkürzt sich die Zeit, die für die Erstellung der Aufnahmebohrung erforderlich ist. Auch kann die kleinere Aufnahmebohrung oft bereits mit einem weniger leistungsstarken Bohrgerät erstellt werden. Der Anschlussdurchmesser kann gleich gross oder sogar grösser ausgebildet werden, als bei vergleichbaren Spreizdübel/Gewindestangen Kombinationen. Die einteilige Ausbildung des Betonankers wirkt auch der Gefahr eines Verbiegens entgegen, die bei Spreizdübel/Gewindestangenkombinationen wegen eines ungenügend weiten Einschraubens der Gewindestange auftreten kann. Die formschlüssige Verankerung des Schneidgewindes in der Wandung der Aufnahmebohrung führt zu besseren Halte- und Auszugswerten und erlaubt kleinere Achs- und Randabstände.

Für die Schneidfunktion des Schneidgewindes am vorderen Schaftabschnitt erweist es sich als zweckmässig, wenn die Gewindeflanken miteinander einen Winkel einschliessen, der etwa 35° bis etwa 55° beträgt. Ein besonders guter Kompromiss zwischen der Schneidfunktion einerseits und der weitgehend spreizdruckfreien formschlüssigen Verankerung der Windungen des Schneidgewindes in der Wandung der Aufnahmebohrung andererseits ergibt sich, wenn die Gewindeflanken miteinander einen Winkel von 45° einschliessen.

Aus fertigungstechnischen Gründen und um eine Verletzungsgefahr des Anwenders abzuwenden ist der Berührungsbereich der Gewindeflanken mit einem Radius versehen, der etwa 0.1 mm bis etwa 1 mm beträgt. Trotz des Radius ist die Schneide des Schneidgewindes immer noch scharfkantig genug, um sich beim drehenden Setzen des Betonankers leicht in die Bohrungwandung zu graben.

Indem das setzrichtungsseitige Vorderende des Schafts in einem kegelstumpfförmigen Einsteckbereich endet, wird das Ansetzen des Betonankers an die Aufnahmebohrung und der Beginn des Schneidvorgangs erleichtert.

Der kegelstumpfförmige Einsteckbereich ist mit Vorteil gewindefrei ausgebildet. Das Schneidgewinde weist im Anschluss an den kegelstumpfförmigen Einsteckbereich einen Gewindeeinlaufbereich auf, in dem das Schneidgewinde an der Mantelfläche des Schafts beginnt und auf einen maximalen radialen Überstand zunimmt. Dadurch wird ein Verhaken des vorderen Schaftabschnitts des Betonankers am Beginn des Setzvorgangs verhindert. Der Gewindeeinlaufbereich bewirkt eine Führung und ein leichtes Vorschneiden des Gewindes in der Bohrungswandung.

Damit dieser Vorschneidvorgang relativ kurz gehalten wird, erweist es sich als zweckmässig wenn der Geweindeeinlaufbereich sich über einen Winkelbereich von maximal 85° erstreckt. Durch diesen relativ steilen Anstieg auf den maximalen radialen Überstand des Schneidgewindes wird der Betonanker sehr schnell in das Innere der Bohrlochwandung vorgetrieben und dort stabilisiert. Dadurch wird einem Verkanten und Verkippen des Betonankers beim Setzvorgang entgegengewirkt.

Aus bohrsökonomischer Sicht weist der mit dem Schneidgewinde ausgestattete vordere Schaftabschnitt einen kleineren Kerndurchmesser auf als der mit dem Lastangriffsmittel ausgestattete rückwärtige Schaftabschnitt. Besonders effektiv hinsichtlich des Querschnitts der erforderlichen Aufnahmebohrung und des nutzbaren Anschlussdurchmessers erweist sich ein gewindeschneidender Betonanker, dessen Schneidgewinde in seinem Bereich mit maximalem radialem Überstand einen Aussendurchmesser aufweist, der etwa einem Anschlussdurchmesser des rückwärtigen Schaftabschnitts entspricht.

Der erfindungsgemässe gewindeschneidende Betonanker erlaubt es, den Kerndurchmesser des mit dem Schneidgewinde ausgestatteten vorderen Schaftabschnitts nur etwa 1 mm bis etwa 5 mm kleiner auszubilden als den Kerndurchmesser des rückwärtigen Schaftabschnitts. Dadurch sind bei gewindeschneidenden Betonankern mit einem gegebenen Anschlussdurchmesser deutlich höhere Halte- und Auszugswerte erzielbar als bei Dübel/ Gewindestangenkombinationen mit vergleichbarem Anschlussdurchmesser.

Eine vorteilhafte Ausführungsvariante des gewindeschneidenden Betonankers sieht vor, dass der vordere Schaftabschnitt eine gewindeartige Profilierung aufweist, die sich zwischen den Windungen des Schneidgewindes entlang des vorderen Schaftabschnitts erstreckt und einen kleineren radialen Überstand aufweist als das Schneidgewinde. Die gewindeartige Profilierung dient einerseits als Führung des Schneidabschnitts beim Setzvorgang. Andererseits verdichtet die gewindeartige Profilierung das vom Schneidgewinde abgetragene Bohrklein und erhöht dadurch noch zusätzlich die Halte-und Auszugswerte.

Für die Verdichtungsfunktion erweist es sich von Vorteil, wenn die gewindeartige Profilierung Flanken aufweist, die miteinander einen Winkel einschliessen, der grösser ist, als der von den Gewindeflanken des Schneidgewindes eingeschlossene Winkel. Insbesondere ist der eingeschlossene Winkel ein stumpfer Winkel von ca. 125° bis etwa 155°.

Für die Führungsfunktion der gewindeartigen Profilierung erweist es sich von Vorteil, wenn sie eine Steigung aufweist, die einer Steigung des Schneidgewindes entspricht.

Damit der gewindeschneidende Betonanker beim Setzvorgang mit seinem Schneidbereich vollständig in die Aufnahmebohrung eingeschraubt wird, erweist es sich als zweckmässig, wenn der mit dem Schneidgewinde ausgestattete vordere Schaftabschnitt und der mit dem Lastangriffsmittel ausgestattete rückwärtigen Schaftabschnitt durch einen Zwischenabschnitt voneinander getrennt sind. Der Anwender hat dadurch eine einfache visuelle Kontrolle über den Einschraubvorgang.

Die Kontrolle und die Reproduzierbarkeit des Setzvorgangs wird noch dadurch verbessert, dass ein dem vorderen Schaftabschnitt näherer Bereich des Zwischenabschnitts in Richtung des Schneidgewindes kegelstumpfförmig erweitert ausgebildet ist. Der erweiterte Bereich dient als Stabilisierungshilfe für den Betonanker. Beim Setzvorgang erhöht sich der Einschraubwiderstand sobald der erweiterte Bereich die Bohrungsmündung erreicht. Dadurch merkt der Anwender auch ohne genaue visuelle Kontrolle, dass der Betonanker ausreichend tief gesetzt ist und der Setzvorgang beendet ist. Dadurch wird auch ein Überdrehen des Betonankers vermieden.

Der erfindungsgemässe gewindeschneidende Betonanker dient vorwiegend als Ersatz für Dübel/Gewindestangenkombinationen. Entsprechend ist das im rückwärtigen Schaftabschnitt vorgesehene Lastangriffsmittel von einer gewindeartigen Profilierung der Mantelfläche des Schafts gebildet, die sich über einen Grossteil seiner axialen Länge erstreckt. Für eine spezifische Einsetzbarkeit des Betonankers ist die gewindeartige Profilierung je nach Anwendung ein Grobgewinde, beispielsweise ein Rollgewinde oder ein Spindelgewinde, ein metrisches Gewinde, ein Whitworthgewinde oder ein Feingewinde.

Der erfindungsgemässe gewindeschneidende Betonanker ist auch für eine kontrollierte Mehrfachverwendung ausgebildet. Bei den derzeit in Verwendung stehenden Spreizdübel/Gewindestangenkombinationen werden keine Angaben bezüglich der Häufigkeit der Wiederverwendbarkeit der Gewindestange gemacht, noch diesbezüglich irgendwelche Garantien gegeben Bei verbogenen, verschmutzten oder verrosteten Gewindestangen ist eine Sichtprüfung meist nicht möglich. Feinste Haarrisse kann allenfalls ein Fachmann identizieren. Bisher kann der Anwender nicht erkennen, ob eine Gewindestange fünfmal oder bereits 100 mal in Gebrauch war. Daher wird bei den bekannten Gewindestangen eine Sichtprüfung in der Praxis oft nicht durchgeführt, sondern die Gewindestange solange verwendet, bis das Material ermüdet und bricht. Dabei kann es zu Maschinenschäden oder sogar zu Personenschäden kommen. Der erfindungsgemäss ausgebildete gewindeschneidende Betonanker trägt diesem Umstand in einer vorteilhaften Ausführungsvariante dadurch Rechnung, dass das Schneidgewinde wenigstens in einem Teil seiner Windungen mit Verschleissmarkierungen ausgebildet ist.

Vorzugsweise sind die Verschleissmarkierungen von bereichsweise vorgesehenen Aussparungen bzw. Abflachungen der Windungen gebildet, die sich vom Umfang des Gewindes radial bis etwa ¾ des maximalen radialen Überstands des Schneidgewindes erstrecken. Die Verschleissmarkierungen erlauben eine einfache und schnelle Sichtprüfung auch durch den Laien. Schmutz oder Rost spielen keine Rolle. Je nach Anwendung verschwinden die Verschleissmarkierungen nach etwa 50 bis 100 Setzvorgängen. Sind die Verschleissmarkierungen im Schneidgewinde verschwunden, weiss der Anwender, dass der Betonanker aussortiert werden muss. Dadurch können Unfälle mit Maschinen- oder sogar Personenschäden wegen eines Versagens des Betonankers zuverlässig vermieden werden.

Die erfindungsgemässe Ausbildung des gewindeschneidenden Betonanker ermöglicht es, diesen in einem kostengünstigen Rollwalzverfahren herzustellen.

Bei dem erfindungsgemässen gewindeschneidenden Betonankers ist das Angriffsmittel zur Drehmomentübertragung ein an den rückwärtigen Schaftabschnitt angeformter Ansatz, der eine polygone, vorzugsweise regelmässig mehreckige, insbesondere sechseckige, Querschnittskontur aufweist. Die Ausbildung des Angriffsmittels am rückwärtigen Endabschnitt des Schaftes erlaubt es, den Betonanker manuell oder mit einer Drehbohreinrichtung zu setzen. Die polygonale, insbesondere sechseckige Querschnittskontur ermöglicht den Einsatz einer einfachen Stecknuss.

Der erfindungsgemäss ausgebildete gewindeschneidende Betonanker ist vielfältig einsetzbar. Je nach Ausbildungsvariante kann er zur lösbaren temporären Befestigung einer Montageplatte eines Kernbohrgeräts oder eines sonstigen Werkzeugs, zur Befestigung der Montageschiene einer Diamantsäge, zur Befestigung von Absturzsicherungen an Treppen und dergleichen verwendet werden. Diese Aufzählung ist nicht abschliessend. Dem Fachmann erschliessen sich ohne weiteres auch noch weitere Anwendungsgebiete, die an dieser Stelle nicht explizit genannt sind.

Weitere Vorteile und Merkmale ergeben sich aus der nachfolgenden Beschreibung einer beispielsweisen Ausführungsvariante der Erfindung unter Bezugnahme auf die schematischen Zeichnungen. Es zeigen in nicht massstabsgetreuer Darstellung:
- Fig. 1: eine Seitenansicht des Betonankers;
- Fig. 2: eine vergrösserte Schnittdarstellung eines vorderen Schaftabschnitts; und
- Fig. 3: eine Ansicht des Betonankers gemäss Pfeil III in Fig. 1

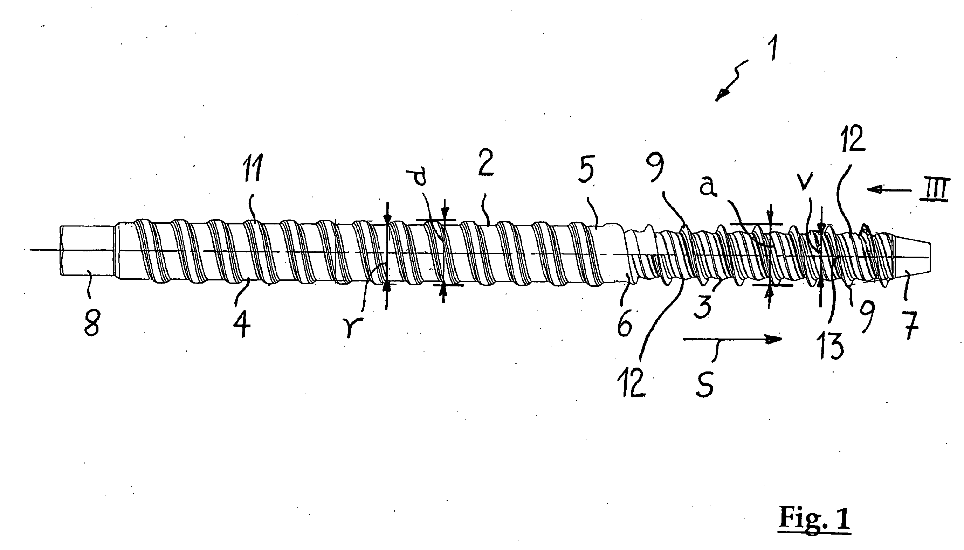

Der in Fig. 1 dargestellte gewindeschneidende Betonanker trägt gesamthaft das Bezugszeichen 1. Er weist einen zylindrischen Schaft 2 auf, der bezogen auf eine Setzrichtung S einen vorderen Schaftabschnitt 3 und einen rückwärtigen Schaftabschnitt 4 umfasst. Der vordere Schaftabschnitt 3 ist als ein Schneidabschnitt ausgebildet und mit einem wendelartig umlaufenden Schneidgewinde 9 ausgestattet. Die Windungen des Schneidgewindes 9 überragen den Kerndurchmesser v des vorderen Schaftabschnitts 3 und weisen einen über den grössten radialen Überstand des Schneidgewindes 9 gemessenen Aussendurchmesser a auf. Das Schneidgewinde 9 erstreckt sich durchgehend im wesentlichen über die gesamte Länge des vorderen Schaftabschnitts 3 und ist messerartig scharfkantig ausgebildet. Bereichsweise Aussparungen bzw. Abflachungen am Umfang der Schneide 9 bilden Verschleissmarkierungen 13. Es müssen nicht alle Windungen des Schneidgewindes 9 mit Verschleissmarkierungen 13 versehen sein. Das setzrichtungsseitige Vorderende des vorderen Schaftabschnitts endet in einem Einsteckabschnitt 7, der kegelstumpfförmig ausgebildet und gewindelos ist. Zwischen den Windungen des Schneidgewindes 9 verläuft eine gewindeartige Profilierung 12, die einen geringeren Überstand über den Kerndurchmesser des vorderen Schaftabschnitts 3 aufweist als das Schneidgewinde 9. Die Steigung der gewindeartigen Profilierung 12 entspricht der Steigung des Schneidgewindes 9.

Der vordere Schaftabschnitt 3 ist durch einen Zwischenabschnitt 5 vom rückwärtigen Schaftabschnitt 4 getrennt. Der Zwischenabschnitt 5 bildet einen Übergang vom Schneidgewinde zum Anschlussgewinde und besitzt einen an den vorderen Schaftabschnitt 3 angrenzenden, kegelstumpfförmig in Richtung des Schneidgewindes 9 erweiterten Bereich 6 zur Stabilisierung des gesetzten Betonankers 1. Der rückwärtige Schaftabschnitt 4 ist mit einem Lastangriffsmittel 11 zur Anbindung eines Bauteils ausgebildet. Das Lastangriffsmittel 11 ist als eine gewindeartige Profilierung ausgebildet, insbesondere ein Rollgewinde. Ein Kerndurchmesser des rückwärtigen Schaftabschnitts 4 ist mit dem Bezugszeichen r versehen. Ein über die Windungen des Lastangriffsmittels 11 gemessener Anschlussdurchmesser d im rückwärtigen Schaftabschnitt 4 ist etwa gleich gross bzw. nur geringfügig grösser als der über die Schneiden 9 gemessen Aussendurchmesser a des vorderen Schaftabschnitts 3. Bei einem Anschlussdurchmesser d von 17 mm beträgt der über die Schneiden 9 gemessene Aussendurchmesser a beispielsweise etwa 16,5 mm. Der Kerndurchmesser r des rückwärtigen Schaftabschnitts 4 beträgt dabei 15 mm, und der Kerndurchmesser v des vorderen Schaftabschnitts beträgt ca. 11,7 mm.

An den rückwärtigen Schaftabschnitt 4 ist ein Ansatz 8 angeformt, der mit einem Aussensechskant versehen ist. Der Ansatz 8 dient zum Angriff eines Werkzeugs bzw. eines Drehbohrgeräts zur Drehmomentübertragung an den Betonanker 1 beim Setzvorgang.

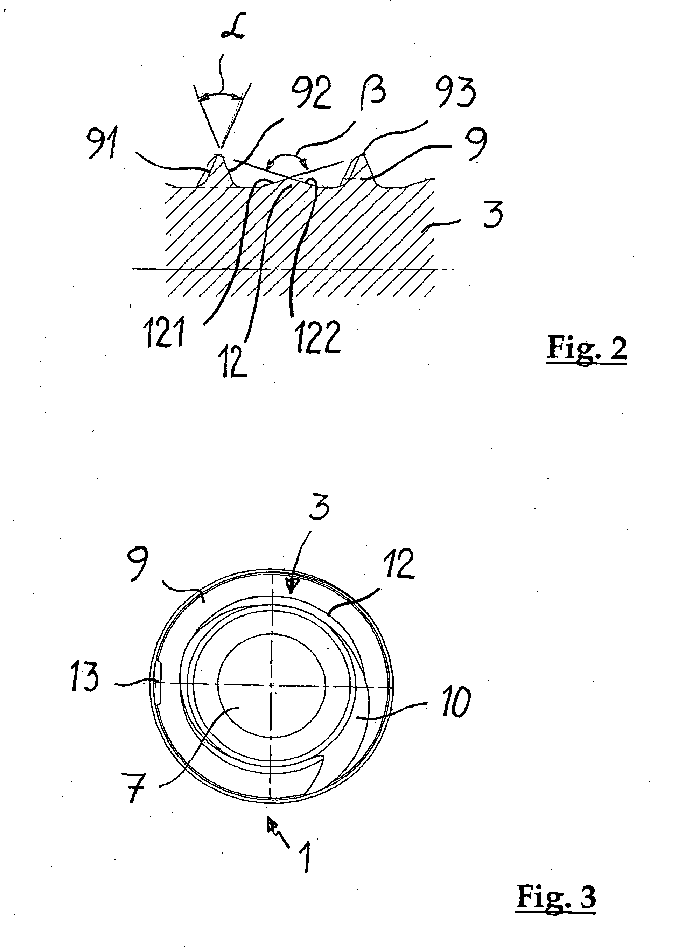

Die Schnittdarstellung in Fig. 2 zeigt den vorderen Schaftabschnitt 3 mit der wendelartig umlaufenden Schneide 9 und der gewindeartigen Profilierung 12. Die Schneide 9 besitzt Gewindeflanken 91, 92 die in einem spitzen Winkel α zueinander geneigt sind. Der von den Gewindeflanken 91, 92 eingeschlossene Winkel beträgt etwa 35° bis etwa 55°, vorzugsweise 45°. Ein Berührungsbereich 93 der beiden Gewindeflanken 91, 92 ist mit einem Radius versehen, der etwa 0.1 mm bis etwa 1 mm beträgt. Zwischen den Gewindegängen der Schneide 9 befindet sich die gewindeartige Profilierung 12, deren radialer Überstand über die Mantelfläche des vorderen Schaftabschnitts 3 geringer ist als derjenige der umlaufenden Schneide 9. Die gewindeartige Profilierung 12 weist Flanken 121,122 auf, die miteinander einen Winkel β einschliessen. Der Winkel β ist stumpfwinkelig und beträgt etwa 125° bis etwa 155°.

Fig. 3 zeigt eine Ansicht auf den Einsteckbereich 7 des Betonankers 1 gemäss Pfeil III in Fig.1. Das stumpfe Vorderende des kegelstumpfförmigen Einsteckbereichs 7 ist klar ersichtlich. Das Schneidgewinde 9 besitzt einen Gewindeeinlauf 10, in dem der Überstand des Schneidgewindes 9 von Null auf den maximalen radialen Überstand anwächst. Der Gewindeeinlaufbereich 10 erstreckt sich dabei über einen Winkel, der nicht grösser ist als 85°. Bei 12 ist die gewindeartige Profilierung angedeutet. Fig. 3 zeigt auch eine Verschleissmarkierung 13, die als eine bereichsweise Aussparung am Umfang einer Windung des Schneidgewindes 9 ausgebildet ist. Die Ausparung erstreckt sich vom Umfang der Schneide 9 radial bis etwa ¾ des maximalen radialen Überstands des Schneidgewindes 9.

Der gewindeschneidende Betonanker ist für Verankerungen in Aufnahmebohrungen in harten Untergründen wie Beton, Stein, Mauerwerk oder dergleichen ausgebildet. Er erlaubt eine unmittelbare formschlüssige Verankerung in der Wandung der Aufnahmebohrung. Auf Spreizdübel, Gewindestangen und dergleichen kann verzichtet werden. Die Anbindung eines Bauteils an den mit dem Lastangriffsmittel versehenen rückwärtigen Schaftabschnitt des Betonankers erfolgt über eine aufschraubbare Mutter oder dergleichen. Der gewindeschneidende Betonanker ist vielfältig einsetzbar. Je nach Ausbildungsvariante kann er zur lösbaren temporären Befestigung einer Montageplatte eines Kernbohrgeräts oder eines sonstigen Werkzeugs, zur Befestigung der Montageschiene einer Diamantsäge, zur Befestigung von Absturzsicherungen an Treppen und dergleichen verwendet werden.

## Patentansprüche

1. Wieder verwendbarer gewindeschneidender Betonanker zur Verankerung in harten Untergründen wie Beton, Stein, Mauerwerk oder dergleichen, mit einem im wesentlichen zylindrischen Schaft (2), der einen Schneidabschnitt mit einem wendelförmig umlaufenden Schneidgewinde (9) mit Gewindeflanken (91, 92), aufweist, welcher Schneidabschnitt bezogen auf eine Setzrichtung (S) einen vorderen Schaftabschnitt (3) bildet, einem sich entgegen der Setzrichtung (S) erstreckenden, einen rückwärtigen Schaftabschnitt bildenden Befestigungsabschnitt, der ein Lastangriffsmittel (11) aufweist, sowie mit einem Angriffsmittel (8) zum Angriff eines Werkzeugs resp. Drehbohrgeräts zur Übertragung von Drehmoment an den Schaft (2) zum drehenden Setzen des Ankers, und einem gestuften Kerndurchmesser des Schafts (2), wobei der vordere Schaftabschnitt (3) einen ersten Kerndurchmesser (v) und der rückwärtige Schaftabschnitt (4) einen zweiten Kerndurchmesser (r) bildet und der vordere Schaftabschnitt (3) einen kleineren Kerndurchmesser (v) aufweist als der rückwärtige Schaftabschnitt (4),
**dadurch gekennzeichnet,**
**dass** die Gewindeflanken (91, 92) miteinander einen spitzen Winkel (α) einschliessen und dass der vordere Schaftabschnitt (3) eine gewindeartige Profilierung (12) aufweist, die sich zwischen den Windungen des Schneidgewindes (9) entlang des vorderen Schaftabschnitts (3) erstreckt und einen kleineren radialen Überstand aufweist als das Schneidgewinde (9), wobei die gewindeartige Profilierung (12) Flanken (121,122) aufweist, die miteinander einen stumpfen Winkel (β) einschliessen, der etwa 125° bis etwa 155° beträgt

2. Gewindeschneidender Betonanker nach Anspruch 1, **dadurch gekennzeichnet, dass** der von den Gewindeflanken (91, 92) eingeschlossene Winkel (α) etwa 35° bis etwa 55° beträgt.

3. Gewindeschneidender Betonanker nach Anspruch 2, **dadurch gekennzeichnet, dass** der von den Gewindeflanken (91, 92) eingeschlossene Winkel (α) etwa 45° beträgt

4. Gewindeschneidender Betonanker nach einem der vorangehenden Ansprüche, **dadurch gekennzeichnet, dass** ein Berührungsbereich (93) der Gewindeflanken (91, 92) mit einem Radius versehen ist, der etwa 0.1 mm bis etwa 1 mm beträgt.

5. Gewindeschneidender Betonanker nach einem der vorangehenden Ansprüche, **dadurch gekennzeichnet, dass** das setzrichtungsseitige Vorderende des Schafts (2) in einem kegelstumpfförmigen Einsteckbereich (7) endet

6. Gewindeschneidender Betonanker nach Anspruch 5, **dadurch gekennzeichnet, dass** der kegelstumpfförmige Einsteckbereich (7) gewindefrei ausgebildet ist und das Schneidgewinde (9) im Anschluss an den kegelstumpfförmigen Einsteckbereich (7) einen Gewindeeinlaufbereich (10) aufweist, in dem das Schneidgewinde (9) von der Mantelfläche des Schafts (2) auf einen maximalen radialen Überstand zunimmt.

7. Gewindeschneidender Betonanker nach Anspruch 6, **dadurch gekennzeichnet, dass** der Geweindeeinlaufbereich (10) sich über einen Winkelbereich von maximal 85° erstreckt

8. Gewindeschneidender Betonanker nach einem der Ansprüche 1 bis 7, **dadurch gekennzeichnet, dass** das Schneidgewinde (9) in seinem Bereich mit maximalem radialem Überstand einen Aussendurchmesser (a) aufweist, der etwa einem Anschlussdurchmesser (d) des rückwärtigen Schaftabschnitts (4) entspricht.

9. Gewindeschneidender Betonanker nach einem der Ansprüche 1 bis 8, **dadurch gekennzeichnet, dass** der Kerndurchmesser (v) des mit dem Schneidgewinde (9) ausgestatteten vorderen Schaftabschnitts (3) etwa 1 mm bis 5 mm kleiner ist als der Kerndurchmesser (r) des rückwärtigen Schaftabschnitts (4).

10. Gewindeschneidender Betonanker nach einem der Ansprüche 1 bis 9, **dadurch gekennzeichnet, dass** die gewindeartige Profilierung (12) eine Steigung aufweist, die einer Steigung des Schneidgewindes (9) entspricht

11. Gewindeschneidender Betonanker nach einem der vorangehenden Ansprüche, **dadurch gekennzeichnet, dass** der mit dem Schneidgewinde (9) ausgestattete vordere Schaftabschnitt (3) und der mit dem Lastangriffsmittel (11) ausgestattete rückwärtigen Schaftabschnitt (4) durch einen Zwischenabschnitt (5) voneinander getrennt sind.

12. Gewindeschneidender Betonanker nach Anspruch 11, **dadurch gekennzeichnet, dass** ein dem vorderen Schaftabschnitt (3) näherer Bereich (6) des Zwischenabschnitts (5) in Richtung des Schneidgewindes (9) kegelstumpfförmig erweitert ausgebildet ist

13. Gewindeschneidender Betonanker nach einem der vorangehenden Ansprüche, **dadurch gekennzeichnet, dass** das im rückwärtigen Schaftabschnitt (4) vorgesehene Lastangriffsmittel (11) von einer gewindeartigen Profilierung der Mantelfläche des Schafts (2) gebildet ist, die sich über einen Grossteil seiner axialen Länge erstreckt

14. Gewindeschneidender Betonanker nach Anspruch 13, **dadurch gekennzeichnet, dass** die gewindeartige Profilierung (11) ein Grobgewinde, beispielsweise ein Rollgewinde oder ein Spindelgewinde, ein metrisches Gewinde, ein Whitworthgewinde oder ein Feingewinde ist

15. Gewindeschneidender Betonanker nach einem der vorangehenden Ansprüche, **dadurch gekennzeichnet, dass** das Schneidgewinde (9) wenigstens in einem Teil seiner Windungen mit Verschleissmarkierungen (13) ausgebildet ist

16. Gewindeschneidender Betonanker nach Anspruch 15, **dadurch gekennzeichnet, dass** die Verschleissmarkierungen (13) von bereichsweise vorgesehenen Aussparungen bzw. Abflachungen der Windungen gebildet sind, die sich vom Umfang des Schneidgewindes (9) radial bis etwa ¾ des maximalen radialen Überstands des Schneidgewindes (9) erstrecken.

17. Gewindeschneidender Betonanker nach einem der vorangehenden Ansprüche, **dadurch gekennzeichnet, dass** er in einem Rollwalzverfahren hergestellt ist.

18. Gewindeschneidender Betonanker nach einem der vorangehenden Ansprüche, **dadurch gekennzeichnet, dass** das Angriffsmittel (8) zur Drehmomentübertragung ein an den rückwärtigen Schaftabschnitt (4) angeformter Ansatz ist, der eine polygone, vorzugsweise regelmässig mehreckige, insbesondere sechseckige, Querschnittskontur aufweist

19. Gewindeschneidender Betonanker nach einem der Ansprüche 11-12, **dadurch gekennzeichnet, dass** das Angriffsmittel zur Drehmomentübertragung am gewindelosen Zwischenabschnitt ausgebildet ist und eine polygonale, vorzugsweise regelmässig mehreckige, insbesondere sechseckige, Querschnittskontur aufweist

20. Verwendung eines gewindeschneidenden Betonankers (1) gemäss Patentanspruch 18 oder 19 zur lösbaren temporären Befestigung einer Montageplatte eines Kernbohrgeräts oder eines sonstigen Werkzeugs, zur Befestigung der Montageschiene einer Diamantsäge, zur Befestigung von Absturzsicherungen an Treppen und dergleichen.

## Claims

1. A reusable thread-cutting concrete anchor for anchoring in hard foundations such as concrete, stone, masonry or likewise, with an essentially cylindrical shank (2) which comprises a cutting section with a spirally peripheral cutting thread (9) with thread flanks (91, 92), said cutting section forming a front shank section (3) with respect to a setting direction (S), with a fastening section which extends opposite to the setting direction (S), forms a rearward shank section and comprises a load engagement means (11), as well as with an engagement means (8) for the engagement of a tool or rotating drill apparatus for transmitting torque onto the shank (2) for the rotating setting of the anchor, and with stepped core diameter of the shank (2), wherein the front shank section (3) forms a first core diameter (v), and the rearward shank section (4) forms a second core diameter (r), and the front shank section (3) has a smaller core diameter (v) than the rearward shank section (4),
**characterised in that**
the thread flanks (91, 92) enclose an acute angle (a) with one another and that the front shank section (3) has a thread-like profiling (12) which extends between the windings of the cutting thread (9) along the front shank section (3), and has a smaller radial projection than the cutting thread (9), wherein the thread-like profiling (12) comprises flanks (121, 122) which enclose an obtuse angle (ß) with one another, which is about 125° to about 155°.

2. A thread-cutting concrete anchor according to claim 1, **characterised in that** the angle (a) enclosed by the thread flanks (91, 92) is about 35° to about 55°,

3. A thread-cutting concrete anchor according to claim 2, **characterised in that** the angle enclosed by the thread flanks (91, 92) is about 45°.

4. A thread-cutting concrete anchor according to one of the preceding claims, **characterised in that** a contact region (93) of the thread flanks (91, 92) is provided with a radius which is about 0.1 mm to about 1 mm.

5. A thread-cutting concrete anchor according to one of the preceding claims, **characterised in that** the front end of the shank (2) on the side in the setting direction, ends in a truncated-cone-shaped insert region (7).

6. A thread-cutting concrete anchor according to claim 5, **characterised in that** the truncated-cone-shaped insert region (7) is designed in a thread-free manner and the cutting thread (9) in the connection to the truncated-cone-shaped insert region (7) has a thread run-in region (10), in which the cutting thread (9) increases from the peripheral surface of the shank (2) to a maximal radial projection.

7. A thread-cutting concrete anchor according to claim 6, **characterised in that** the thread run-in region (10) extends over an angular region of maximal 85°.

8. A thread-cutting concrete anchor according to one of the claims 1 to 7, **characterised in that** the cutting thread (9), in its region with a maximal radial projection, has an outer diameter (a) which corresponds roughly to a connection diameter (d) of the rearward shank section (4).

9. A thread-cutting concrete anchor according to one of the claims 1 to 8, **characterised in that** the core diameter (v) of the front shank section (3) provided with the cutting thread (9), is about 1mm to 5mm smaller than the core diameter (r) of the rearward shank section (4).

10. A thread-cutting concrete anchor according to one of the claims 1 to 9, **characterised in that** the thread-like profiling (12) has a pitch which corresponds to a pitch of the cutting thread (9).

11. A thread-cutting concrete anchor according to one of the preceding claims, **characterised in that** the front shank section (3) provided with the cutting thread (8) and the rearward shank section (4) provided with the load engagement means (11), are separated from one another by an intermediate section (5).

12. A thread-cutting concrete anchor according to claim 11, **characterised in that** a region (6) of the intermediate section (5), said region being closer to the front shank section (3), is designed widened in a truncated-cone-shaped manner in the direction of the cutting thread (9).

13. A thread-cutting concrete anchor according to one of the preceding claims, **characterised in that** the load engagement means (11) provided in the rearward shank section (4) is formed by a thread-like profiling of the peripheral surface of the shank (2), said profiling extending over a large part of its axial length.

14. A thread-cutting concrete anchor according to claim 13, **characterised in that** the thread-like profiling (11) is a coarse thread, for example a roll thread or a spindle thread, a metric thread, a Whitworth thread or a fine thread.

15. A thread-cutting concrete anchor according to one of the preceding claims, **characterised in that** the cutting thread (9), at least in a part of its windings, is formed with wear markings (13).

16. A thread-cutting concrete anchor according to claim 15, **characterised in that** the wear markings (13) are formed by regionally provided recesses or flattenings of the windings, which extend radially from the periphery of the cutting thread (9) up to about ¾ of the maxima radial projection of the cutting thread (9).

17. A thread-cutting concrete anchor according to one of the preceding claims, **characterised in that** it is manufactured in a die rolling method.

18. A thread-cutting concrete anchor according to one of the preceding claims, **characterised in that** the engagement means (8) for torque transmission is a lug which is integrally formed on the rearward shank section (4) and which has a polygonal, preferably regular polygonal, in particular hexagonal cross-sectional contour.

19. A thread-cutting concrete anchor according to one of the claims 11-12, **characterised in that** the engagement means is designed for torque transmission on the threadless intermediate section and has a polygonal, preferably regular polygonal, in particular hexagonal cross-sectional contour.

20. The use of a thread-cutting concrete anchor according to patent claim 18 or 19 for the releasable temporary fastening of an assembly plate of a core drilling apparatus or other tool, for fastening the assembly rail of a diamond saw, for fastening fall safeguards on steps and likewise.

## Revendications

1. Tirant taraudant réutilisable pour béton pour l'ancrage dans des supports durs tels que le béton, la pierre, la maçonnerie ou équivalent, avec une tige substantiellement cylindrique (2) qui présente une section taraudante avec un filet taraudant périphérique hélicoïdal (9) avec des flancs de filet (91, 92), laquelle section taraudante forme une section antérieure de tige (3) par rapport à un sens de tassement (S), une section de fixation qui s'étend à l'encontre du sens de tassement (S), qui forme une section de tige postérieure, qui présente un moyen d'application des charges (11) ainsi qu'avec un moyen d'attaque (8) pour l'attaque d'un outil ou d'un appareil de forage rotatif pour transmettre un couple de rotation à l'a tige (2) pour la pose rotative du tirant et un diamètre de noyau gradué de la tige (2), la section antérieure de la tige (3) formant un premier diamètre de noyau (v) et la section postérieure de la tige (4) formant un second diamètre de noyau (r) et la section antérieure de la tige (3) présentant un plus petit diamètre de noyau (v) que la section postérieure de la tige (4),
**caractérisé en ce**
**que** les flancs du filet (91, 92) enferment l'un avec l'autre un angle aigu (a) et que la section antérieure de la tige (3) présente un profilage de type filet (12) qui s'étend entre les enroulements du filet taraudant (9) le long de la section antérieure de la tige (3) et présente un plus petit porte-à-faux radial que le filet taraudant (9), le profilage de type filet (12) présentant des flancs (121, 122) qui enferment l'un avec l'autre un angle obtus (ß) qui est d'environ 125° à environ 155°.

2. Tirant taraudant pour béton selon la revendication 1, **caractérisé en ce que** l'angle (a) compris par les flancs de filet (91, 92) est d'environ 35° à environ 55°.

3. Tirant taraudant pour béton selon la revendication 2, **caractérisé en ce que** l'angle (a) compris par les flancs de filet (91,92) est d'environ 45°.

4. Tirant taraudant pour béton selon l'une des revendications précédentes, **caractérisé en ce qu'**une zone de contact (93) des flancs de filet (91, 92) est pourvue d'un rayon qui est d'environ 0,1 mm à environ 1 mm.

5. Tirant taraudant pour béton selon l'une des revendications précédentes, **caractérisé en ce que** l'extrémité antérieure de la tige (2) du côté du sens du tassement se termine dans une zone d'emboîtement en forme de cône tronqué (7).

6. Tirant taraudant pour béton selon la revendication 5, **caractérisé en ce que** la zone d'emboîtement en forme de cône tronqué (7) est configurée sans filet et le filet taraudant (9) présente une zone d'entrée de filet (10) suivant la zone d'emboîtement en forme de cône tronqué (7), zone d'entrée de filet dans laquelle le filet taraudant (9) augmente de la surface d'enveloppe de la tige (2) à un porte-à-faux radial maximal.

7. Tirant taraudant pour béton selon la revendication 6, **caractérisé en ce que** la zone d'entrée de filet (10) s'étend sur une zone d'angle de 85° maximum.

8. Tirant taraudant pour béton selon l'une des revendications 1 à 7, **caractérisé en ce que** le filet taraudant (9) présente, dans sa zone avec un porte-à-faux radial maximal, un diamètre extérieur (a) qui correspond approximativement à un diamètre de raccord (d) de la section postérieure de la tige (4).

9. Tirant taraudant pour béton selon l'une des revendications 1 à 8, **caractérisé en ce que** le diamètre du noyau (v) de la section antérieure de la tige (3) équipée du filet taraudant (9) est d'environ 1 mm à 5 mm plus petit que le diamètre du noyau (r) de la section postérieure de la tige (4).

10. Tirant taraudant pour béton selon l'une des revendications 1 à 8, **caractérisé en ce que** le profilage de type filet (12) présente un pas qui correspond à un pas du filet taraudant (9).

11. Tirant taraudant pour béton selon l'une des revendications précédentes, **caractérisé en ce que** la section antérieure de la tige (3) équipée du filet taraudant (9) et la section postérieure de la tige (4) équipée du moyen d'application des charges (11) sont séparées l'une de l'autre par une section intermédiaire (5).

12. Tirant taraudant pour béton selon la revendication 11, **caractérisé en ce qu'**une zone (6) de à section intermédiaire (5) qui est proche de la section antérieure de la tige (3) est configurée élargie en forme de cône tronqué en direction du filet taraudant (9).

13. Tirant taraudant pour béton selon l'une des revendications précédentes, **caractérisé en ce que** le moyen d'application des charges (11) prévu dans la section postérieure de la tige (4) est formé par un profilage de type filet de la surface d'enveloppe de la tige (2) qui s'étend sur une grande partie de sa longueur axiale.

14. Tirant taraudant pour béton selon la revendication 13, **caractérisé en ce que** le profilage de type filet (11) est un filet à pas grossier, par exemple un filetage roulé ou un filetage de broche, un filet métrique, un filet Whitworth ou un filet à pas fin.

15. Tirant taraudant pour béton selon l'une des revendications précédentes, **caractérisé en ce que** le filet taraudant (9) est configuré au moins dans une partie de ses enroulements avec des marquages d'usure (13).

16. Tirant taraudant pour béton selon la revendication 15, **caractérisé en ce que** les marquages d'usure (13) sont formés par des évidements ou des aplatissements des enroulements prévus par section qui s'étendent de la circonférence du filet taraudant (9) radialement jusqu'à environ % du porte-à-faux radial maximal du filet taraudant (9).

17. Tirant taraudant pour béton selon l'une des revendications précédentes, **caractérisé en ce qu'**il est fabriqué par un procédé de laminage roulage.

18. Tirant taraudant pour béton selon l'une des revendications précédentes, **caractérisé en ce que** le moyen d'attaque (8) pour la transmission du couple de rotation est un épaulement moulé sur la section postérieure de la tige (4) qui présente des contours de section polygonale, de préférence de polygone régulier, en particulier d'hexagone.

19. Tirant taraudant pour béton selon l'une des revendications 11-12, **caractérisé en ce que** le moyen d'attaque (8) pour la transmission du couple de rotation est configuré sur la section intermédiaire sans filet et présente des contours de section polygonale, de préférence de polygone régulier, en particulier d'hexagone.

20. Utilisation d'un tirant taraudant pour béton (1) selon la revendication 18 ou 19 pour la fixation temporaire détachable d'une plaque de montage d'un appareil de sondage à carotte ou d'un autre outil, pour la fixation du rail de montage d'une scie à diamants pour la fixation de protections antichute sur des escaliers et équivalent.
